Europäisches Patentamt

(19) European Patent Office  (11) Publication number: **0 078 667**

Office européen des brevets  **B1**

(12) **EUROPEAN PATENT SPECIFICATION**

(45) Date of publication of patent specification: **13.05.87**  (51) Int. Cl.⁴: **B 01 D 13/00**

(21) Application number: **82305727.8**

(22) Date of filing: **28.10.82**

(54) **Apparatus for separating a liquid into two fractions by means of semipermeable membranes.**

(30) Priority: **03.11.81 DK 4864/81**
**03.11.81 DK 4865/81**

(43) Date of publication of application:
**11.05.83 Bulletin 83/19**

(45) Publication of the grant of the patent:
**13.05.87 Bulletin 87/20**

(84) Designated Contracting States:
**AT BE CH DE FR GB IT LI LU NL SE**

(56) References cited:
**EP-A-0 015 416**
**DD-A- 114 205**
**FR-A-1 530 753**
**FR-A-2 371 954**
**FR-A-2 383 694**
**NL-A-7 415 083**
**US-A-3 332 216**
**US-A-4 230 564**

(73) Proprietor: **MEDICOSMOS ApS**
**11 Sondergade**
**DK-4130 Viby Sjaelland (DK)**

(72) Inventor: **Bo, Peter**
**54 Haraldsborgvej**
**DK-4000 Roskilde (DK)**
Inventor: **Christensen, Torkil**
**13 Tarnbjerggardsvej**
**DK-4320 Lejre (DK)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

The invention relates to an apparatus for separating liquid feed mixtures into two fractions by means of semipermeable membranes. The apparatus is of a kind having a pressure vessel containing a stack of semipermeable membranes abutting against permeable membrane supporting plates spaced apart by structural elements to form membrane channels, a feed channel for feeding the feed mixture to the membrane channels, a concentrate channel for receiving the liquid leaving the membrane channels and permeate ducts for receiving the permeate passing through the membranes and the membrane supporting plates. Apparatus of this kind, e.g. from DK—A—138 876, DK—A—141 009, DD—A—114 205, US—A—3,623,610 and US—A—3,398,833, and they are used in processes called ultrafiltration, hyperfiltration or reverse osmosis.

The two fractions produced by these processes are characterized by their content of substances having different molecular sizes or other properties.

Ultrafiltration and hyperfiltration are, for instance, used in the food and medical industry and in water purification and desalination plants, and they are becoming more and more important in the industrial society.

In apparatus of hitherto known construction, difficulties and shortcomings arise with regard to operation, energy economy, fields of application and cleaning.

In the operation of such apparatus, the separation takes place at the membrane surface in the membrane channels. This gives rise, at the membrane surface, to a local increase in concentration of the substances which do not pass through the membranes. The phenomenon, called concentration polarization, results in a reduced permeate flow rate and a lower degree of separation (retention). In more serious cases, the concentration polarization may result in the formation of precipitates or, in case of macromolecules, in the formation of a gel layer on the membrane surface and possibly in the destruction of the membrane.

The concentration polarization can be reduced by giving the feed mixture a high linear velocity along the membrane surface e.g. by rotating the membrane means as suggested in US—A—4,230,564 to obtain a centrifuge action or by injecting the feed mixture into a closed membrane chamber tangentially through a narrow feed channel as suggested in DD—A—114,205. This, however, results in substantial problems with regard to operation, energy economy and fields of application of the known apparatus. Firstly, the flow across the membranes must be as uniform as possible, in order to avoid a situation where large areas have a higher concentration polarisation than other areas. Secondly, the pressure drop required for maintaining the flow in the individual membrane channel must be as small as possible both in order to maintain uniform process conditions and to minimize the energy consumption, which is proportional to the pressure drop, but also because the total pressure drop by passage of a plurality of consecutive membrane channels must be low.

An apparatus contains normlly a large number of membrane channels which, with regard to flow, are divided into parallel-arranged and/or series-arranged channels. Since the requirement of high linear velocity applies to each membrane channel, it is large quantities of liquid, e.g. 100—200 $m^3/h$, which must be supplied as feed mixture to the apparatus to be distributed between the number of parallel-arranged membrane channels and, as concentrate, collected from the membrane channels and removed. The channels which carry out this distribution to, and collection from the membrane channels are called feed channel and concentrate channel, respectively. Large frictional pressure losses in these channels result in different pressures in the different membrane channels, resulting in varying process conditions in the different membrane channels, and in an increase in energy consumption which is proportional to the total frictional pressure loss. In many ultrafiltration processes, the pressure in the membrane channels must not exceed a certain critical value, which may depend on the stability of the membranes used or on the fact that when the critical pressure is exceeded, an increase in gel formation takes place on the membrane surface, without increase in the permeate flow rate in a ratio corresponding to the increase in pressure. Exceeding this critical pressure means, therefore, either damaging the membrane or wasting energy in the cases where the permeate flow rate is not increased in a ratio corresponding to the increase in pressure. The increase in gel formation on the membrane surface gives, furthermore, rise to maintenance and cleaning difficulties and may, in more serious cases, result in a destruction of the membrane.

An apparatus in which the frictional pressure loss, caused by the liquid flow, and thereby the pressure variations through the apparatus are of the same order of magnitude as the critical pressure has, therefore, a very low efficiency, a high energy consumption and no possibility of process control proper. This means that the fact that concentration polarization must be taken into consideration can prevent an effective utilization of the apparatus, in processes requiring that the pressure everywhere in the membrane channels lies below the critical pressure.

In order, *inter alia*, to avoid the unfortunate effects of the concentration polarization, the membrane channels must be designed as thin channels which in practice are not higher than 1 mm. The entrance and exit conditions around the membrane channels from and to the feed channel and the concentrate channel, respectively, are decisive for the smooth flow distribution and the pressure drop across the membrane channel and for the frictional pressure losses in the entrance and exit areas.

The combination of structural elements which form and support the membrane channels, form entrance and exit to and from these and collect and remove the permeate from the membrane supporting plates in the known apparatus gives rise to a non-uniform flow distribution in the membrane channels, narrow passages and substantial pressure losses at inlet and outlet, and structural limitations on the dimensions of the feed and concentrate channels and on their position in relation to the membrane channels, with the result that the frictional pressure losses in the feed and the concentrate channels cannot be reduced substantially in the known apparatus. These are the reasons why the frictional pressure loss caused by the flow of liquid through the known apparatus is so high that it causes problems with regard to operation, energy consumption, process control and fields of application.

Most of the apparatus of the type in question which are known in practice are rim or edge-tightened apparatus in which the membranes extend out to the periphery of the apparatus where sealing against the surroundings takes place by compressing the stack of membranes, membrane supporting plates and generally also spacer or guiding plates extending through the apparatus between consecutive membranes in the stack. Such a mode of construction presents a number of drawbacks in addition to those already mentioned. The use of spacer or guiding plates in the membrane channels is energy and material consuming, it increases the frictional pressure loss per unit of membrane area and it is space consuming. Spacer or guiding plates are, however, normally necessary in rim or edge-tightened apparatus for reasons of strength, especially when these apparatus have a comparatively large membrane area per membrane supporting plate and/or are to work at relatively high pressure in the membrane channels. At the same time, the plates normally have a flow guiding function.

The rim or edge-tightening makes it difficult to clean the apparatus in the perpheral area where the flow rate and thereby the liquid replacement is low. Heat sterilzation of rim or edge-tightened apparatus is made further difficult by the fact that the heat is rapidly conducted away to the surroundings in areas where the liquid replacement is low.

Sealing of rim or edge-tightened apparatus against the surroundings requires a very great compression force increasing with increasing area per membrane and with increasing pressure in the membrane channels of the apparatus.

The permeate outlets from the membrane supporting plates are in known apparatus of the type in question placed at the periphery of the membrane supporting plate, with the result that the permeate has a relatively long flow path in the membrane supporting plate. This limits the size of the area per membrane and the possibility of reducing the thickness of the membrane supporting plate.

As it appears from the description above, most of the problems which arise are related to structural elements in connection with the entrance to and outlet from the membrane channels, to the size and position of the feed and concentrate channels in relation to the membrane channels, to the placing of the permeate outlets or the permeate ducts and to the rim or edge-tightening.

It is an object of the present invention to remedy the above-mentioned defects of the known apparatus so as to be able to achieve, as will be described more fully below, a greater yield for a given investment in apparatus for ultrafiltration and hyperfiltration, a cheaper operation as a result of reduced energy consumption, the possibility of process control proper, the possibility of extension of the field of application, easier cleaning and maintenance, and increased life of membranes and apparatus.

By the present invention, substantial improvements are achieved by keeping that part of the periphery of the membrane channel that runs perpendicular or transverse to the flow direction in the membrane channel free of structural elements that reduce the flow area from feed channel to membrane channel and from membrane channel to concentrate channel.

The apparatus according to the invention is characterised in that the feed channel 6 surrounds the stack 2, 3 of membranes 3 and membrane supporting plates 2 so that feed mixture has free access to the membrane channels around the circumference of the stack 2, 3, that the concentrate channel 7 extends centrally through said stack 2, 3 and that a number of permeate ducts 1 intersect said stack 2, 3 substantially midway between the inlet from the feed channel 6 and the outlet to the concentrate channel 7.

By this positioning of the permeate ducts, it is possible to avoid most of the above-mentioned drawbacks. That part of the periphery of the membrane channel that runs perpendicular or transverse to the flow direction in the membrane channel is kept free for inflow from the feed channel and outflow to the concentrate channel, or for flow from one membrane channel to the following for in series arranged membranes, so that feed channel and concentrate channel extend along this part of the periphery, and so that the flow from one membrane channel to the following takes place along all this part of the periphery. Thereby the flow passages through the apparatus are opened up, with the result that frictional pressure loss due to flow through the apparatus is reduced. The other problems and defects of the known apparatus are furthermore remedied as explained in the following.

An advantageous embodiment of the apparatus according to the invention is characterized in that parts of the structural elements partly forming the permeate ducts at the same time keep the membrane supporting plates mutually spaced to form the membrane channels.

The invention will be explained further below with reference to the schematic drawings in which

Fig. 1 shows a partial section through part of an embodiment of elements forming a membrane channel and a permeate duct,

Fig. 2 shows in a corresponding manner another embodiment,

Figs. 3, 4 and 5 show different embodiments of structural elements forming parts of the permeate duct wall and which can be regarded as sections in elements as shown in Figs. 1 and 2,

Fig. 6 shows, seen from above, a circular membrane supporting plate with membrane and with circular structrual elements seen in cross section along line VI—VI in Fig. 7,

Fig. 7 shows a cross section along line VII—VII in Fig. 6, and

Fig. 8 shows a vertical section through part of an embodiment of an apparatus according to the invention.

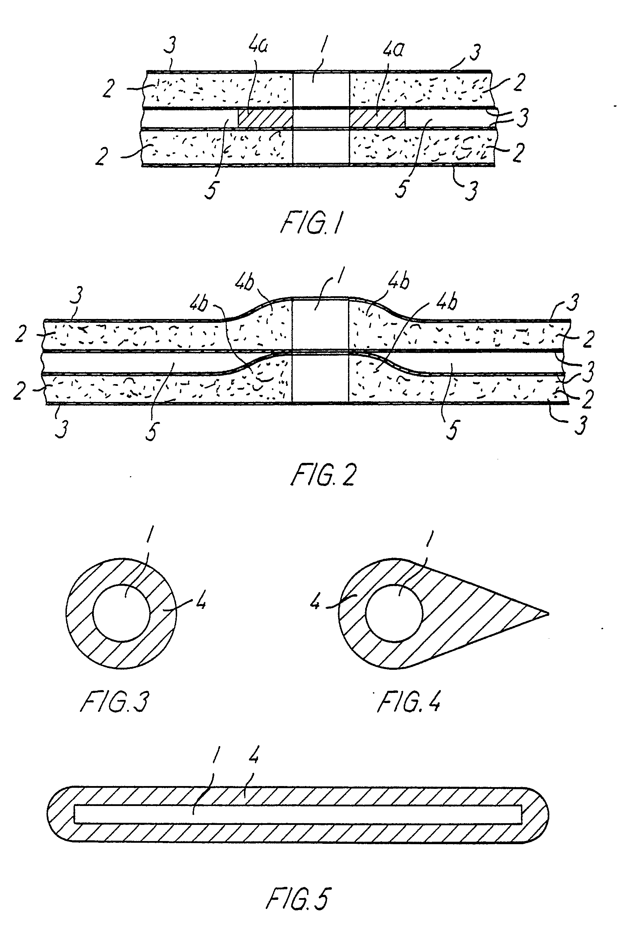

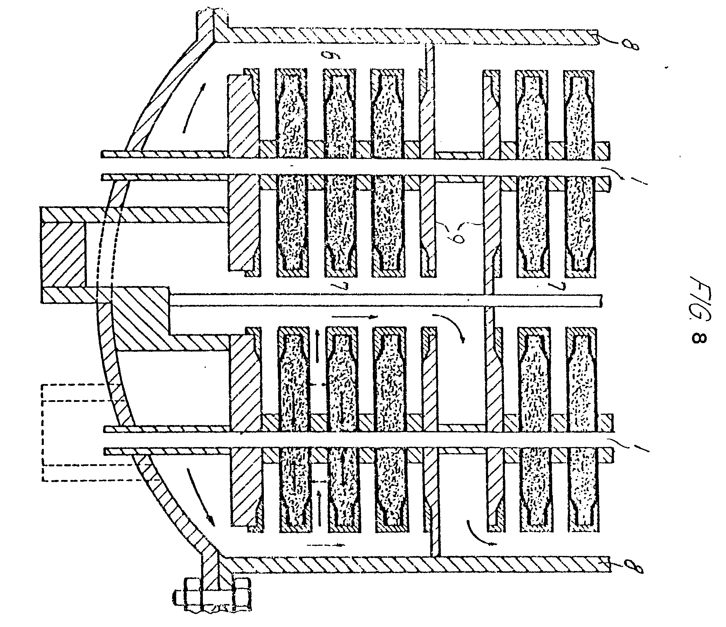

The present invention relates in particular to the position and design of the permeate ducts, of which details in various embodiments are shown in Figs. 1—8. The structure of the apparatus itself is illustrated in Fig. 8, in which use is made of same reference designations for the individual parts forming the permeate ducts.

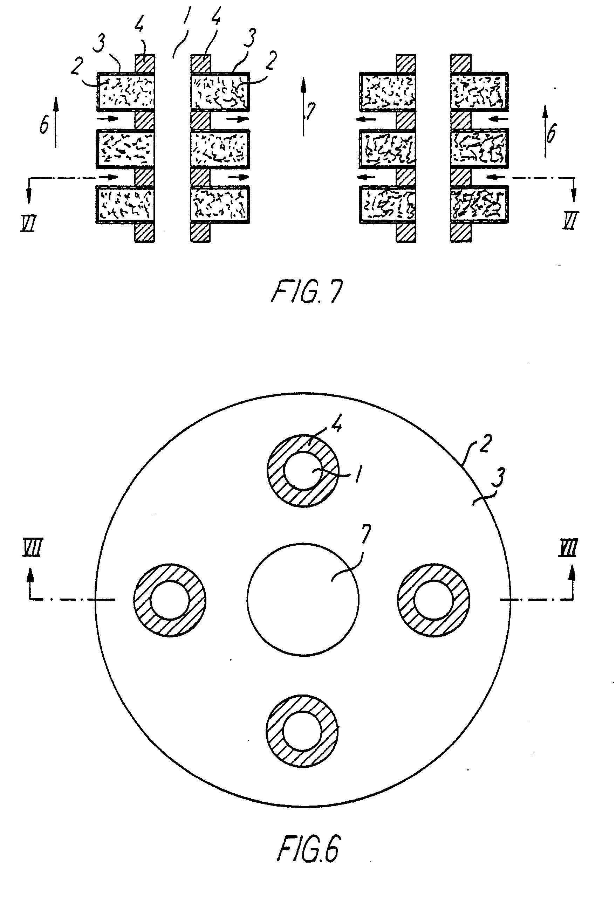

Fig. 1 shows a section across a part of a permeate duct 1 which, for instance, is provided in a stack of membrane supporting plates 2 as the one shown in Figs. 6 and 7. The separate duct 1 extends in the axial direction of the stack and is situated at a distance from the outer peripheries, circular in the example shown, of the membrane supporting plate. Permeate ducts 1 are provided in a suitable number. In the example of Fig. 6, there are four ducts which extend through the whole stack of membrane supporting plates 2 with associated membranes 3, as it appears from Fig. 8.

As will be seen from Fig. 1, between the two membrane supporting plates 2, provision is made of a structural element 4a, which serves to keep the membrane supporting plates 2 spaced so that a membrane channel 5 is formed between them and constitutes a part of the wall of the permeate duct, as provision ·is made in the structural element 4a of a hole in line with corresponding holes in the membrane supporting plates 2.

The structural element 4a may be an independent element or an integral part of the membrane supporting plate 2, as is shown in Fig. 2 where said element is designated 4b. It may have different cross sections, as it appears from Figs. 3, 4 and 5. In Fig. 3 it is annular, in Fig. 4 streamlined with a view to avoiding areas having less favourable flow conditions, and in Fig. 5 it is oblong, so that only few elements disposed along stream lines in the membrane channel 5 are necessary.

The feed mixture is supplied to the membrane channel 5 and flows through this, e.g. as shown by an arrow in Fig. 6. In Fig. 6 the flow is radial from the outer periphery to the inner one. That part of the liquid which passes through the semipermeable membranes and which is called permeate penetrates through the porous material, which the membrane supporting plates 2 are made of, and flows into the permeate duct 1. As a result of the position of the permeate ducts 1 on the very large surface of the membrane supporting plates 2, the flow picture of the permeate is different from, and more favourable than the known ones, where the permeate ducts are positioned along an outer edge of the membrane supporting plates.

The use of structural elements placed on the membrane surface to form parts of the permeate ducts offers a number of advantages as compared to the known use of structural elements placed on the membrane surface to form feed channel and/ or concentrate channel. Firstly, the necessary dimensions of the prmeate duct are smaller than the necessary dimensions of the feed channel and the concentrate channel, and the elements therefore occupy less space on the wide surface of the membrane channel and are easier to seal between membrane channel and permeate side. Secondly, they may as permeate ducts be placed arbitrarily on the wide surface of the membrane channel, contrary to the feed channel and concentrate channel, which have to be placed correctly in relation to the flow in the membrane channel. The placing is, however, suitably effected so as to give the least possible flow disturbance, but at the same time, it is desirable that this placing should be so as to make the flow path of the permeate in the membrane supporting plate short, the frictional pressure loss on the permeate side being thereby reduced.

In Figs. 6 and 7 the size of the elements 4 carrying the membrane supporting plates 2 and partly forming the permeate ducts is exaggerated in relation to the other parts in order to clarify their function. It will appear that a suitable placing of these elements 4 makes it possible to keep the inlet from the feed channel 6 and the outlet to the concentrate channel 7 free of obstructions which might inhibit the free flow. The channels 6 and 7 are only indicated schematically by arrows. They can be placed entirely outside the area of the membrane channel 5 and at the same time in immediate connection with all that part of the periphery of the membrane channel that runs perpendicular or transverse to the flow direction in said channel. The sealing along the periphery of the membrane channel between feed-concentrate side and permeate side in the membrane supporting plate is effected by glueing of the membrane to the edge of the supporting plate which in this part is massive. Sealing may, moreover, be effected in many known manners, of which another one is shown in Fig. 8. Sealing is not difficult to achieve, as the membrane is in principle self-sealing on account of the high pressure on the feed-concentrate side and of the low pressure on the permeate side.

The use of the structural element in apparatus built up in a pressure vessel 8 is partly shown in Fig. 8. The apparatus has circular membrane channels arranged mainly in parallel with the membrane channels within each section arranged in parallel, while the sections, which are separated by section separating elements 9 are arranged in series. The flow in the apparatus is always directed from the outer periphery towards the inner one, the flow being then converging in all membrane channels, which results in a reduction in the concentration polarization.

For clarity, the figures show only a small number of membrane supporting plates and membrane channels within each section. Likewise, for clarity, the relative dimensions of the elements concerned are not accurate. Finally, when it is the flow paths which have to be illustrated, all the membrane supporting plates with membranes and sealings are not drawn in detail but only outlined.

A characteristic feature of the apparatus thus designed is the free flow paths for feed mixture and concentrate to and from the membrane channel along all that part of its periphery (internal as well as external) that runs perpendicular or transverse to the flow direction in the channel, and in membrane channels arranged in series, the free flow path from one membrane channel to the following one along all this part of the periphery. A characteristic feature is also that the feed channel and the concentrate channel are kept entirely free of the membrane channels and are adjoining these along all that part of their periphery that runs perpendicular or transverse to the flow direction in the channels. It is also characteristic that, owing to the fact that they are kept free of the membrane channels, the feed channel and the concentrate channel can, be dimensioned arbitrarily and therefore be given cross-sectional areas of such a size that the frictional pressure losses in these are negligible. The result of said conditions is that the frictional pressure loss through the apparatus is substantially smaller, e.g. from 5 to 50 times smaller, than in the known apparatus. This gives a possibility of process control proper and a widening of the field of application of such apparatus.

It is characteristic of the apparatus in question that they do not require spacer or guiding plates in the membrane channels and also that the section separating elements shown in the figures can be designed so as to have membranes on the sides facing the membrane channels. This reduces the energy consumption and the frictional pressure losses, and material and space are saved so that practically all space in the apparatus is utilized for functions relevent to the process.

It is also characteristic that the apparatus in question are easy to clean and possibly steam sterilize, because the areas where the liquid renewal is low are reduced to a minimum and because the favourable flow conditions along the area of the apparatus bordering the surroundings (in contrast to rim or edge-tightened apparatus) make it possible to maintin the temperature in this area sufficiently high to allow a sterilization.

A further characteristic of the apparatus in question is that the compression shall only effect a sealing along the comparatively small area around the elements forming and supporting the membrane channels and the permeate ducts. The compression force required is thereby substantially reduced as compared to the rim or edge-tightened apparatus, which results in an increase in the life of the materials used and/or in a reduction of the requirements as to strength of the materials.

It is also characteristic of the apparatus in question that a simple variation of the dimensions can increase the membrane area per membrane supporting plate without increasing substantially the demands on the compression force and assembling device.

Although the circular shape of membrane channels is, for reasons of flow, the preferred one, the membrane channels of the apparatus may, in principle, be given any geometrical shape.

As it appears from the figures, the apparatus may be built up with membrane channels arranged mainly in parallel or mainly in series, depending on which one of these arrangements is more advantageous for a given application. Likewise, the number of membrane channels per section and the number of sections may vary according to requirement.

It is characteristic of the apparatus in question that by choosing the position of the structural elements carrying the membrane channels and partly forming the permeate ducts, it is possible, for one thing, to take into account the flow conditions in the membrane channels and, for another thing, to make sure that the flow path of the permeate in the membrane supporting plate is so short that the frictional pressure loss on the permeate side is small and/or the thickness of the membrane supporting plate can be reduced, the volume and height of the apparatus being thereby reduced, which in turn is of importance to the reduction of the frictional pressure losses in feed channel, concentrate channel and permeate duct. Finally, the possibility of reducing the flow path of the permeate in the membrane supporting plate may be utilized to increase the membrane area per membrane supporting plate.

The invention is further remarkable in that it makes possible, for a special application, a combination of dialysis and filtration, as the permeate duct structure allows a flow through the membrane supporting plates. For such application, use is made of one or more permeate ducts for supplying liquid to, and at the same time one or more permeate ducts for leading the liquid away from, the membrane supporting plates.

In the schematic drawing the dimensions are chosen with a view to clarity. For example, one may mention that the membrane channels in practice may have a height of about one millimeter. Furthermore, some of the structural lines have been omitted, in order to make the flow path appear more clearly.

The number of plates and thereby of membrane channels is in practice substantially greater than shown in Fig 8, where only a few are shown in each section, and even only few shown with membranes on both sides.

## Claims

1. An apparatus for separating liquid feed mixtures into two fractions by means of semipermeable membranes and comprising

a pressure vessel (8) containing a stack (23) of semipermeable membranes (3) abutting against permeable membrane supporting plates (2) spaced apart by structural elements (4) to form membrane channels (5),

a feed channel (6) for feeding the feed mixture to the membrane channels,

a concentrate channel (7) for receiving the liquid leaving the membrane channels and

permeate ducts (1) for receiving the permeate passing through the membranes and the membrane supporting plates,

characterized in that the feed channel (6) surrounds the stack (2, 3) of membranes (3) and membrane supporting plates (2) so that feed mixture has free access to the membrane channels (5) around the circumference of the stack (2, 3), that the concentrate channel (7) extends centrally through said stack (2, 3) and that a number of permeate ducts (1) intersect said stack (2, 3) substantially midway between the inlet from the feed channel (6) and the outlet to the concentrate channel (7).

2. An apparatus as claimed in claim 1, characterized in that at least part of the wall of the permeate ducts (1) is formed by the structural elements (4) spacing the membranes apart to form the membrane channels (5).

3. An apparatus as claimed in claim 2, characterized in that the structural elements (4) are separate elements (4a) disposed between opposite membranes (3) in the membrane channel (5).

4. An apparatus as claimed in claim 2, characterized in that the structural elements (4) form an integral part (4b) of the membrane supporting plate (2) so that opposite membranes (3) in the membrane channel (5) are packed facing each other in the area around the structural elements (4b).

5. An apparatus as claimed in claim 2, characterized in that the structural elements (4) are streamlined in relation to the flow in the membrane channel (5), so that the flow is substantially uniform over the free membrane surface (Fig. 4).

6. An apparatus as claimed in claim 5, characterized in that the structural elements (4) are oblong and placed in the flow direction in the membrane channel (5, Fig. 5).

7. An apparatus as claimed in one or more of the claims 1—6, characterized in that the dimensions of the pressure vessel (8) are so adjusted in relation to the dimensions of the membrane supporting plates (3) and the number of flow paths arranged in parallel in the apparatus that the frictional pressure loss in feed channel (6) and concentrate channel (7) is small as compared to the total frictional pressure loss across the membrane channels (5) arranged in series.

8. An apparatus as claimed in one or more of the claims 1—7, wherein the membrane supporting plates (2) are circular and the complete outer circumference of the ring-shaped membrane channel (5) represents the inlet for the feed liquid and the complete inner circumference the outlet for the concentrate.

9. An apparatus as claimed in one or more of the claims 1—8, wherein each membrane supporting plate (2) is intersected by the number of permeate ducts (1 Fig. 6) arranged in a pattern minimizing the maximum lengths of the paths of the permeate in the membrane supporting plates (2) and avoiding obstruction of the feed and concentration flow in the inlet and outlet of the membrane channels (5) respectively.

## Patentansprüche

1. Vorrichtung zum Trennen flüssiger Speisegemische in zwei Teilmengen mittels semipermeabler Membranen und umfassend

einen Druckbehälter (8) enthaltend einen Stapel (2, 3) semipermeabler Membranen (3), die gegen permeable Membranunterstützungsplatten (2) anliegen, wobei die Platten zwecks Bildung von Membrankanälen (5) durch Konstruktionselemente (4) in Abstand voneinander gehalten werden,

einen Speisekanal (6) zum Zuleiten des Speisegemischs zu den Membrankanälen,

einen Konzentratkanal (7) zur Aufnahme der die Membrankanäle verlassenden Flüssigkeit und

Permeatkanäle (1) zur Aufnahme des durch die Membranen und die Membranunterstützungsplatten durchdringenden Permeats,

dadurch gekennzeichnet, dass der Speisekanal (6) den Stapel (2, 3) der Membranen (3) und die Membranunterstützungsplatten (2) umgibt, so dass das Speisegemisch zu den Membrankanälen (5) im Bereich das Stapelumfanges (2, 3) freien Zugang hat, dass der Konzentratkanal (7) zentral durch erwähnten Stapel (2, 3) verläuft, und dass eine Anzahl von Permeatkanälen (1) erwähnten Stapel (2, 3) im wesentlichen in der Mitte zwischen dem Einlauf von dem Speisekanal (6) und dem Ablauf zu dem Konzentratkanal (7) durchschneidet.

2. Vorrichtung nach Anspruch 1, dadurch gekennzeichnet, dass zumindest ein Teil der Wand der Permeatkanäle (1) von der Konstruktionselementen (4) gebildet wird, welche die Membranen zur Bildung der Membrankanäle (5) in Abstand voneinander halten.

3. Vorrichtung nach Anspruch 2, dadurch gekennzeichnet, dass die Konstruktionselemente (4) separate Elemente (4a) sind, die zwischen gegenüberliegenden Membranen (3) in dem Membrankanal (5) angeordnet sind.

4. Vorrichtung nach Anspruch 2, dadurch gekennzeichnet, dass die Konstruktionselemente (4) einen integrierten Teil (4b) der Membranunterstützungsplatte (2) darstellen, so dass gegenüberliegende Membranen (3) in dem Membrankanal (5) im Bereich um die Konstruktionselemente (4a) herum aneinanderliegen.

5. Vorrichtung nach Anspruch 2, dadurch gekennzeichnet, dass die Konstruktionselemente (4) im Verhältnis zur Strömung in dem Membrankanal (5) stromlinienförmig sind, so dass die Strömung über der freien Membranoberfläche im wesentlichen regelmässig ist (Fig. 4).

6. Vorrichtung nach Anspruch 5, dadurch gekennzeichnet, dass die Konstruktionselemente (4) länglich sind und in Strömungsrichtung in dem Membrankanal (5, Fig. 5) angeordnet sind.

7. Vorrichtung nach einem oder mehreren der Ansprüche 1—6, dadurch gekennzeichnet, dass die Masse des Druckbehälters (8) gegenüber den Masse der Membranunterstützungsplatten (2) und der Anzahl in der Vorrichtung parallel angeordneten Strömungsstrecken derart abgestimmt sind, dass der Friktionsdruckverlust in dem Speisekanal (6) und dem Konzentratkanal (7) im Verhältnis zu dem gestamten Friktionsdruckverlust entlang der in Reihe angeordneten Membrankanäle (5) gering ist.

8. Vorrichtung nach einem oder mehreren der Ansprüche 1—7, worin die Membranunterstützungsplatten (2) ringförmig sind, und der gesamte Aussenumfang des ringförmigen Membrankanals (5) den Einlauf für die Speiseflüssigkeit und der gesamte Innenumfang den Ablauf für das Konzentrat darstellt.

9. Vorrichtung nach einem oder mehreren der Ansprüche 1—8, worin jede Membranunterstützungsplatte (2) von der Anzahl von Permeatkanälen (1, Fig. 6) durchschnitten wird, die in einem solchen Muster angeordnet sind, dass die Maximumlänge der Strecken des Permeats in den Membranunterstützungsplatten (2) minimiert ist und die Stockung der Speise- und Konzentratströmung in dem Einlauf bzw. Ablauf der Membrankanäle (5) verhindert wird.

**Revendications**

1. Appareil pour la séparation d'un mélange d'alimentation liquide en deux fractions au moyen de membranes semi-perméables et comprenant

un récipient sous pression (8) contenant un empilement (2, 3) de membranes sem-perméables (3) s'appuyant contre des plaques (2) support de membranes perméables tenues à distance les unes des autres par des éléments de structure (4) pour constituer des canaux de membrane,

un canal (6) d'alimentation pour l'amenée du mélange d'alimentation aux canaux de membrane,

un canal (7) de concentré pour la réception du liquide sortant des canaux de membrane et

des conduits de (1) filtrat pour la réception du filtrat traversant les membranes et les plaques support de membranes,

caractérisé en ce que le canal (6) d'alimentation entoure l'empilement (2, 3) de membranes (3) et de plaques (2) support de membranes de telle sorte que mélange d'alimentation a libre accès aux canaux (5) de membranes autour de la circonférence de l'empilement (2, 3), en ce que le canal (7) de concentré s'étend centralement dans ledit empilement (2, 3) et en ce qu'un nombre de conduits (1) de filtrat intersectent ledit empilement (2, 3) essentiellement à mi-chemin entre l'entrée du canal (6) d'alimentation et la sortie vers le canal (7) de concentré.

2. Appareil selon la revendication 1, caractérisé en ce qu'au moins une partie de la paroi des conduits (1) de filtrat est constituée par les éléments de structure (4) tenant à distance les membranes pour former les canaux (5) de membranes.

3. Appareil selon la revendication 2, caractérisé en ce que les éléments de structure (4) sont des éléments séparés (4a) situés entre des membranes opposés (3) dans le canal (5) de membranes.

4. Appareil selon la revendication 2, caractérisé en ce que les éléments de structure (4) font partie intégrante (4a) de la plaque (2) support de membranes, de telle sorte que des membranes opposés (3) dans le canal (5) de membranes sont asemblées les unes en face des autres dans la zone autour des éléments de structure (4b).

5. Appareil selon la revendication 2, caractérisé en ce que les éléments de structure (4) sont profilés par rapport à l'écoulement dans le canal (5) de membranes, si bien que l'écouplement est essentiellement uniforme sur la surface libre des membranes (fig. 4).

6. Appareil selon la revendication 5, caractérisé en ce que les éléments de structure (4) sont oblongs et placés dans la direction d'écoulement dans le canal (5, fig. 5) de membranes.

7. Appareil selon une ou plusieurs des revendications 1 à 6, caractérisé en ce que les dimensions du récipient sous pression (8) sont adaptées aux dimensions des plaques (3) support de membranes et au nombre de trajets d'écoulement disposés en parallèle dans l'appareil de telle manière que la perte de charge par friction dans le canal (6) d'alimentation et le canal (7) de concentré est faible par rapport à la perte totale de charge par friction dans les canaux (5) de membranes disposés en série.

8. Appareil selon une ou plusieurs des revendications 1 à 7 dans lequel les plaques (2) support de membranes sont circulaires et la circonférence extérieure totale du canal annulaire (5) de membranes constitue l'entrée du liquide d'alimentation et la circonférence intérieure totale la sortie du concentré.

9. Appareil selon une ou plusieurs des revendications 1 à 8 dans lequel chaque plaque (2) support de membranes est intersectée par l'ensemble des conduites (1, fig. 6) de filtrat disposées d'une façon telle que les longueurs maxima des trajets filtrat dans les plaques (2) support de membranes sont réduites le plus possible et qu'une obstruction de l'écoulement d'alimentation et de concentré respectivement à l'entrée et à la sortie des canaux (5) de membranes est évitée.

FIG.1

FIG. 2

FIG.3

FIG.4

FIG.5

FIG.7

FIG.6

FIG. 8